(19) Europäisches Patentamt
European Patent Office
Office européen des brevets

(11) **EP 1 968 011 A2**

(12) **EUROPEAN PATENT APPLICATION**

(43) Date of publication:
**10.09.2008 Bulletin 2008/37**

(51) Int Cl.:
**G06T 7/00** (2006.01)

(21) Application number: **08001730.4**

(22) Date of filing: **30.01.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **31.01.2007 JP 2007020503**

(71) Applicant: **Sanyo Electric Co., Ltd.**
**Moriguchi-shi, Osaka-fu (JP)**

(72) Inventors:
 • **Asari, Keisuke**
  **Moriguchi City**
  **Osaka, 570-8677 (JP)**

 • **Kano, Hiroshi**
  **Moriguchi City**
  **Osaka, 570-8677 (JP)**
 • **Okuda, Kozo**
  **Moriguchi City**
  **Osaka, 570-8677 (JP)**
 • **Ishii, Yohei**
  **Moriguchi City**
  **Osaka, 570-8677 (JP)**

(74) Representative: **Glawe, Delfs, Moll**
**Patentanwälte**
**Postfach 26 01 62**
**80058 München (DE)**

(54) **Method and apparatus for camera calibration, and vehicle**

(57) A camera calibration apparatus has a parameter deriver adapted to find parameters for projecting images shot with N cameras (where N is an integer of 3 or more) onto a predetermined surface and merging the images together. The N cameras comprise a first camera, a second camera, ... and an N-th camera. The i-th camera (where i is every integer between 1 and N, inclusive) shares a common shooting area with at least one of the other (N - 1) cameras, so that there are a plurality of such common shooting areas in total. The parameter deriver finds the parameters based on the results of the shooting of the calibration patterns arranged in the common shooting areas with the corresponding cameras. The calibration patterns are arranged separate from one another.

FIG.10

| | |
|---|---|
| S11 | ACQUIRE SHOT-FOR-CALIBRATION IMAGE FROM EACH CAMERA |
| S12 | CONVERT EACH SHOT-FOR-CALIBRATION IMAGE INTO BIRD'S-EYE VIEW IMAGE BY PLANAR PROJECTION CONVERSION |
| S13 | SUBJECT EACH BIRD'S-EYE VIEW IMAGE TO RIGID BODY CONVERSION USING CALIBRATION PATTERN CORRESPONDENCE (PERFORM INITIAL CALIBRATION ON $H_n'$) |
| S14 | OPTIMIZE $H_4'$ BASED ON POSITIONAL ERRORS (PROJECTION ERRORS) OF CHARACTERISTIC POINTS IN CALIBRATION PATTERNS A3 & A4 |

**EP 1 968 011 A2**

**Description**

**BACKGROUND OF THE INVENTION**

1. Field of the Invention

The present invention relates to a camera calibration apparatus and a camera calibration method for realizing calibration processing needed to project camera-shot images onto a predetermined surface and merge them together. The invention also relates to a vehicle employing such an apparatus and a method.

2. Description of Related Art

In recent years, with increasing awareness for safety, more and more vehicles such as automobiles have come to be equipped with cameras (vehicle-mounted cameras). Moreover, studies have been conducted to exploit image processing technologies to present a camera-shot image not simply as it is but in a more human-friendly form. According to one of such technologies, a shot image is subjected to coordinate conversion to generate and present a bird's-eye view image as if viewed from above the ground. Presented with such a bird's-eye view image, the driver of a vehicle can more easily grasp the circumstances around the vehicle.

There have even been developed field-of-view assistance systems in which images shot with a plurality of cameras are converted through geometric conversion into an all-around bird's-eye view image that is then displayed on a display apparatus (see, for example, Japanese Patent No. 3372944, JP-A-2004-235986, and JP-A-2006-287892). With such a field-of-view assistance system, advantageously, the driver of a vehicle can be presented with an image as viewed from above that shows the circumstances all around the vehicle, that is, 360 degrees around it with no blind spots.

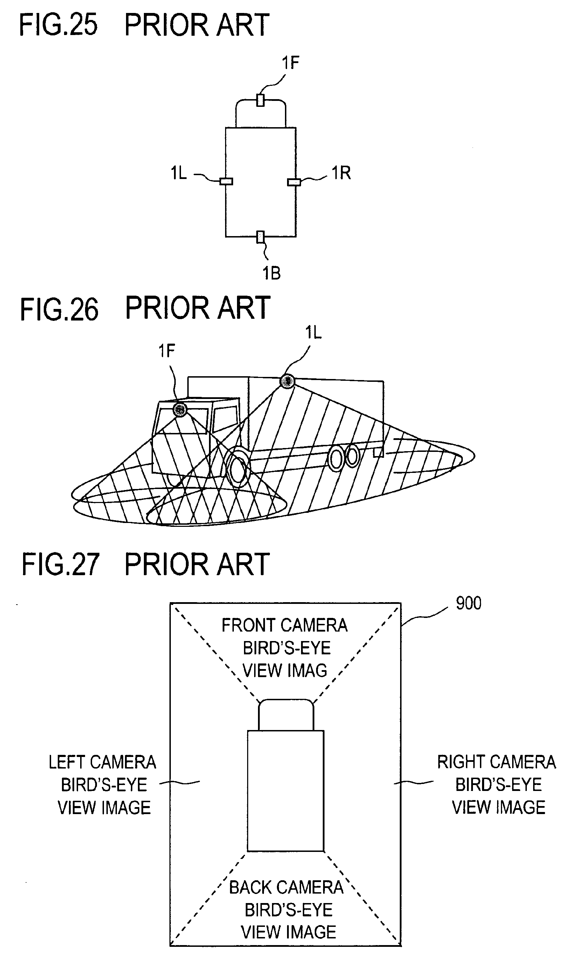

Fig. 25 is a plan view of a vehicle equipped with such a field-of-view assistance system, and Fig. 26 is a diagram showing the vehicle as seen obliquely from the left front. The vehicle is fitted with, at its front, back, left side, and right side respectively, a camera 1F as a front camera, a camera 1B as a back camera, a camera 1L as a left-hand camera, and a camera 1R as a right-hand camera. In Fig. 26, the shooting areas of the cameras 1F and 1L are indicated individually as hatched areas. In this field-of-view assistance system, the images shot with the individual cameras are through coordinate conversion projected onto the ground and merged together to produce and display, as a merged image, an all-around bird's-eye view image. Fig. 27 is a diagram schematically showing the thus displayed all-around bird's-eye view image 900. In the all-around bird's-eye view image 900, at the front, back, left side, and right side of the vehicle are shown bird's-eye view images based on the images shot with the cameras I F, 1B, 1L, and 1R respectively.

An image shot with a camera can be projected onto the ground either by a method based on perspective projection conversion or by a method based on planar projection conversion.

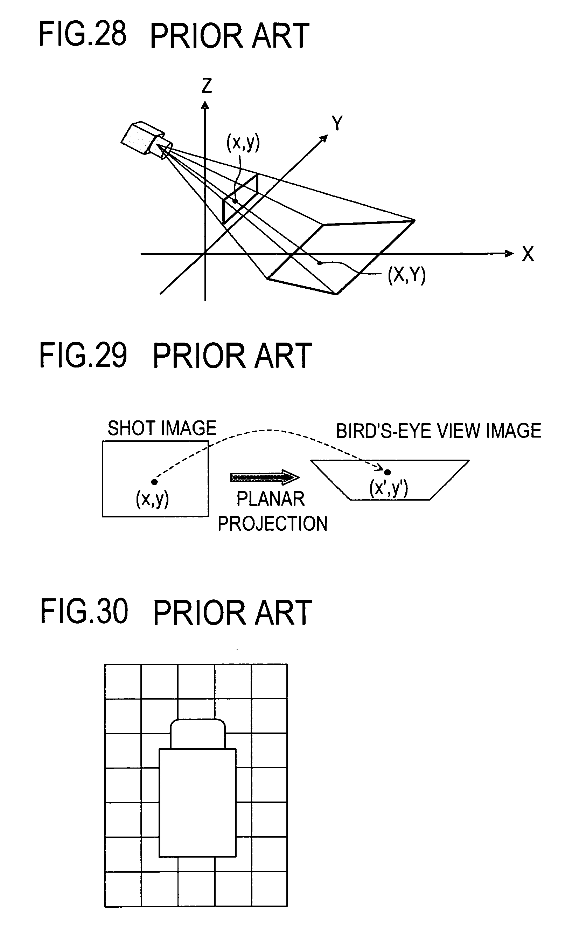

Fig. 28 is a diagram showing the concept of perspective projection conversion. Through perspective projection conversion, the coordinates $(x, y)$ of a point on a shot image are converted to the coordinates $(X, Y)$ of a point on a bird's-eye view image. Since the bird's-eye view image is an image on the ground, at any point on it, the coordinate $(Z)$ in the height direction is zero.

In perspective projection conversion, based on camera external information, such as the angle and height at which a camera is installed, and camera internal information, such as the focal length (or angle of view) of the camera, conversion parameters for projecting a shot image onto a set plane (for example, the surface of the ground) are calculated. Thus, for accurate coordinate conversion, it is necessary to accurately grasp the camera external information. The angle and height at which to install a camera, and the like, are usually prescribed in design. Errors are inevitable, however, between the angle and height as designed and those at which the camera is actually installed on a vehicle. This lowers the accuracy of coordinate conversion. As a result, inconveniently, when a plurality of bird's-eye view images are merged together, smooth merging cannot be achieved at their seams.

On the other hand, in planar projection conversion, a calibration pattern is arranged in a shooting area and, based on the calibration pattern shot, calibration operation is performed that involves finding a conversion matrix that represents the correspondence between coordinates in a shot image (two-dimensional camera coordinates) and coordinates in a bird's-eye view image (two-dimensional world coordinates). This conversion matrix is generally called a homography matrix. Fig. 29 is a diagram showing the concept of planar projection conversion. Through planar projection conversion, the coordinates $(x, y)$ of a point on the shot image are converted to the coordinates $(x', y')$ of a point on the bird's-eye view image. Planar projection conversion does not require camera external or internal information, and permits coordinates mutually corresponding between the shot image and the bird's-eye view image to be specified based on the calibration pattern actually shot. This helps eliminate (or reduce) the effect of errors in camera installation.

A homography matrix for projecting an image shot with a given camera onto the ground can be calculated based on four or more characteristic points with previously known coordinates. To project images shot with a plurality of cameras into a common merged image, however, it is necessary to set the characteristic points used by the different cameras on a common two-dimensional coordinate system. That is, it is necessary to define a two-dimensional coordinate system common to all the cameras as shown in Fig. 30 and specify on this two-dimensional coordinate system the coordinates of four or more characteristic points for each camera.

Thus, in a case where a vehicle such as a truck is fitted with a plurality of cameras and these cameras are calibrated with a view to obtaining an all-around bird's-eye view image, it is necessary to prepare a calibration pattern so large as to cover the shooting areas of all the cameras. In the example shown in Fig. 30, a lattice-shaped calibration pattern that covers the shooting areas of all the cameras is arranged around a vehicle, and the intersections in the lattice are used as characteristic points. A calibration pattern like this has, for example, a size twice the longitudinal and lateral dimensions of a vehicle, and thus it not only occupies a large area in calibration operation but also makes it troublesome to set up an environment for calibration, increasing the burden imposed by calibration operation as a whole. For more efficient calibration operation, a simpler calibration method has been sought.

Incidentally, JP-A-2004-342067 discloses a method in which conversion parameters based on planar projection conversion are adjusted by use of images shot at a plurality of positions (see, among others, paragraph 69 etc.). Even this method requires that a coordinate system (two-dimensional world coordinate system) common to the plurality of images be set, and thus provides no solution to the trouble with setting up the calibration environment.

## SUMMARY OF THE INVENTION

In view of the above, it is an object of the present invention to provide a camera calibration apparatus and a camera calibration method that contribute to simpler setting-up of a calibration environment. It is another object of the invention to provide a vehicle employing such an apparatus and a method.

According to one aspect of the invention, a camera calibration apparatus is provided with: a parameter deriver adapted to find parameters for projecting images shot with N cameras (where N is an integer of 3 or more) onto a predetermined surface and merging the images together. Here, the N cameras include a first camera, a second camera, ... and an N-the camera. Moreover, the i-th camera (where i is every integer between 1 and N, inclusive) shares a common shooting area with at least one of the other (N - 1) cameras, so that there are a plurality of such common shooting areas in total. Moreover, the parameter deriver finds the parameters based on the results of the shooting of calibration patterns arranged in the common shooting areas with the corresponding cameras. Furthermore, the calibration patterns are arranged separate from one another.

By use of the results of the shooting of the calibration patterns arranged in the individual common shooting areas, it is possible to adjust the positions of images among the plurality of cameras that share a common shooting area, and this makes it possible to derive the parameters. Moreover, arranging the individual calibration patterns separate from one another is expected to simplify the setting-up of a calibration environment. Moreover, finding the parameters by use of the results of actual shooting helps reduce the effect of errors in camera installation.

Specifically, for example, the common shooting areas at least include a common shooting area shared between the first and second cameras, a common shooting area shared between the second and third cameras, ... and a common shooting area shared between the (N - 1)-th and N-th cameras.

For example, the parameter deriver defines as a global coordinate system the coordinate system onto which the shot images are projected to be merged together. When a calibration pattern arranged in the common shooting area shared between the (N - 1)-th and N-th cameras is called the currently targeted calibration pattern, the parameter deriver is provided with: a first parameter deriver adapted to find, by use of the results of the shooting of the calibration patterns with the first to (N - 1)-th cameras, a first parameter for subjecting the images shot with the first to (N - 1)-th cameras to coordinate conversion onto the global coordinate system; and a second parameter deriver adapted to find, based on coordinate information on the currently targeted calibration pattern obtained by subjecting the currently targeted calibration pattern shot with the (N - 1)-th camera to coordinate conversion onto the global coordinate system by use of the first parameter and based on coordinate information on the currently targeted calibration pattern shot with the N-th camera, a second parameter for subjecting the image shot with the N-th camera to coordinate conversion onto the global coordinate system. The parameter deriver thus finds the parameters based on the first and second parameters.

This is expected to bring higher calibration accuracy.

For example, the parameter deriver defines as a global coordinate system the coordinate system onto which the shot images are projected to be merged together. The parameter deriver previously knows the shapes of the individual calibration patterns, and previously recognizes those shapes as "previously known information". The parameter deriver first tentatively finds the parameters by use of the results of the shooting of the calibration patterns with the individual cameras and then, by use of the tentatively found parameters, subjects the calibration patterns shot with the individual cameras to coordinate conversion onto the global coordinate system to adjust the tentatively found parameters based on the shapes of the calibration patterns after the coordinate conversion and based on the previously known information. Through this adjustment, the parameter deriver finds the parameters definitively.

This, too, is expected to bring higher calibration accuracy.

According to another aspect of the invention, a vehicle is provided with N cameras and an image processing apparatus. Here, the image processing apparatus is provided with any of the camera calibration apparatuses described above.

According to yet another aspect of the invention, a camera calibration method finds parameters for projecting images shot with N cameras (where N is an integer of 3 or more) onto a predetermined surface and merging the images together. Here, the N cameras include a first camera, a second camera, ... and an N-th camera. Moreover, the i-th camera (where i is every integer between 1 and N, inclusive) shares a common shooting area with at least one of the other (N - 1) cameras, so that there are a plurality of such common shooting areas in total. Moreover, the camera calibration method involves finding the parameters based on the results of the shooting of calibration patterns arranged in the common shooting areas with the corresponding cameras. Furthermore, the calibration patterns are arranged separate from one another.

According to the present invention, it is possible to realize a camera calibration apparatus and a camera calibration method that contribute to simpler setting-up of a calibration environment.

The significance and benefits of the invention will be clear from the following description of its embodiments. It should however be understood that these embodiments are merely examples of how the invention is implemented, and that the meanings of the terms used to describe the invention and its features are not limited to the specific ones in which they are used in the description of the embodiments.

## BRIEF DESCRIPTION OF THE DRAWINGS

Fig. 1 is a plan view of a vehicle equipped with a field-of-view assistance system according to an embodiment of the invention, showing how the vehicle is fitted with cameras;
Fig. 2 is a diagram showing the vehicle shown in Fig. 1 as seen obliquely from the left front;
Figs. 3A to 3D are diagrams respectively showing the shooting areas of the individual cameras fitted to the vehicle shown in Fig. 1;
Fig. 4 is a diagram collectively showing the shooting areas of the individual cameras fitted to the vehicle shown in Fig. 1;
Fig. 5 is a block diagram showing the configuration of a field-of-view assistance system according to an embodiment of the invention;
Fig. 6 is a plan view of and around the vehicle shown in Fig. 1, showing how calibration patterns are arranged;
Fig. 7 is a diagram showing a calibration plate having a calibration pattern drawn on it, as seen from above;
Fig. 8 is a diagram showing bird's-eye view images corresponding to images shot with the individual cameras shown in Fig. 1;
Fig. 9 is a diagram showing an all-around bird's-eye view image produced by the image processing apparatus shown in Fig. 5;
Fig. 10 is a flow chart showing the procedure of calibration processing in Example 1 of the invention;
Fig. 11 shows an example of shot-for-calibration images obtained in calibration processing in Example 1;
Fig. 12 is a diagram showing how a shot-for-calibration image is converted to a bird's-eye view image in Example 1;
Figs. 13A and 13B are diagrams showing an all-around bird's-eye view image before and after, respectively, the optimization of a homography matrix in Example 1;
Fig. 14 is a diagram illustrating a method of optimizing a homography matrix in Example 1;
Fig. 15 is a diagram showing how the figures obtained by projecting a common calibration pattern differ between different cameras in Example 1;
Fig. 16 is a flow chart showing the procedure of calibration processing in Example 2 of the invention;
Figs. 17A to 17D are diagrams showing the flow of the optimization of a homography matrix in Example 2;
Figs. 18A and 18B are diagrams illustrating a method of optimizing a homography matrix in Example 2;
Fig. 19 is a diagram illustrating a method of optimizing a homography matrix in Example 2;
Fig. 20 is a diagram showing a side fixed on a global coordinate system in Example 3 of the invention;
Fig. 21 is a diagram illustrating a method of optimizing a homography matrix in Example 3;
Fig. 22 is a diagram showing how a camera is fitted in Example 4 of the invention;
Fig. 23 is a diagram showing a modified example of a calibration pattern usable in the invention;
Fig. 24 is a diagram showing how bird's-eye view images are subjected to rigid body conversion using the calibration pattern shown in Fig. 23;
Fig. 25 is a plan view of a vehicle equipped with a conventional field-of-view assistance system;
Fig. 26 is a diagram showing the vehicle shown in Fig. 25 as seen obliquely from the left front;
Fig. 27 is a diagram showing an all-around bird's-eye view image displayed by a conventional field-of-view assistance system;

Fig. 28 is a diagram showing the concept of perspective projection conversion;

Fig. 29 is a diagram showing the concept of planar projection conversion; and

Fig. 30 is a diagram illustrating conventional calibration processing corresponding to planar projection conversion, showing a coordinate system (or calibration pattern) defined to be common to a plurality of cameras.

## DETAILED DESCRIPTION OF PREFERRED EMBODIMENTS

Hereinafter, embodiments of the present invention will be described specifically with reference to the accompanying drawings. Among the drawings referred to in the course of description, the same parts are identified by common reference signs, and in principle no overlapping description of the same parts will be repeated. First, prior to the specific presentation of Examples 1 to 4, such features as are common to all the examples or are referred to in the course of their description will be described.

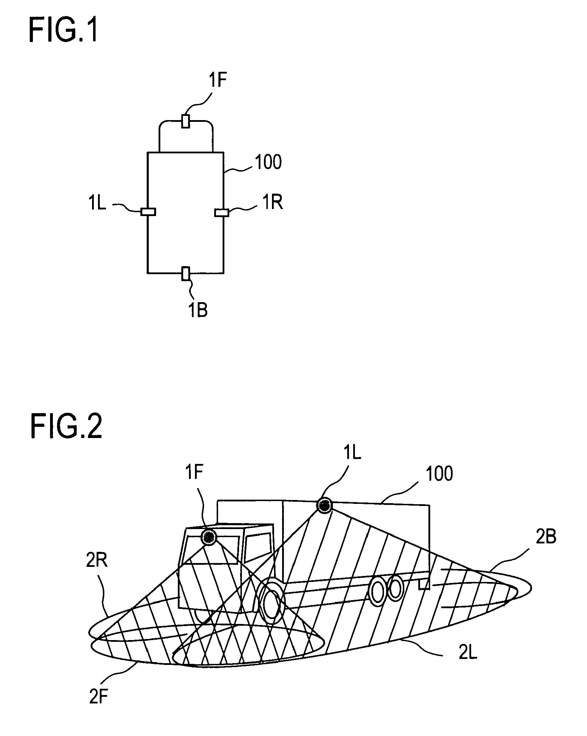

Fig. 1 is a plan view of a vehicle 100 equipped with a field-of-view assistance system according to an embodiment of the invention, and shows how the vehicle 100 is fitted with cameras. Fig. 2 is a diagram showing the vehicle 100 as seen obliquely from the left front. Although Figs. 1 and 2 show a truck as the vehicle 100, the vehicle 100 may be any type of vehicle (such as a common passenger car) other than a truck. The vehicle 100 is located on the ground (for example, on the surface of a road). In the following description, it is assumed that the ground lies on the horizontal plane, and that the word "height" denotes a height with respect to the ground.

As shown in Fig. 1, the vehicle 100 is fitted with cameras (image-sensing apparatuses) 1F, 1R, 1L, and 1B at its front, right side, left side, and back, respectively. In this embodiment, wherever no distinction is necessary among the cameras 1F, 1R, 1L, and 1B, the relevant one or more or each of them is often referred to simply as "the camera" or "the cameras" or "each camera".

As shown in Fig. 2, the camera 1F is installed, for example, above a front mirror of the vehicle 100, and the camera 1L is installed, for example, at the topmost part of the left side of the vehicle 100. Although not shown in Fig. 2, the camera 1B is installed, for example, at the topmost part of the back of the vehicle 100, and the camera 1R is installed, for example, at the topmost part of the right side of the vehicle 100.

The cameras 1F, 1R, 1L, and 1B are fitted to the vehicle 100 in such a way that the optical axis of the camera 1F points obliquely frontward-downward with respect to the vehicle 100, that the optical axis of the camera 1B points obliquely backward-downward with respect to the vehicle 100, that the optical axis of the camera 1L points obliquely leftward-downward with respect to the vehicle 100, and that the optical axis of the camera 1R points obliquely rightward-downward with respect to the vehicle 100.

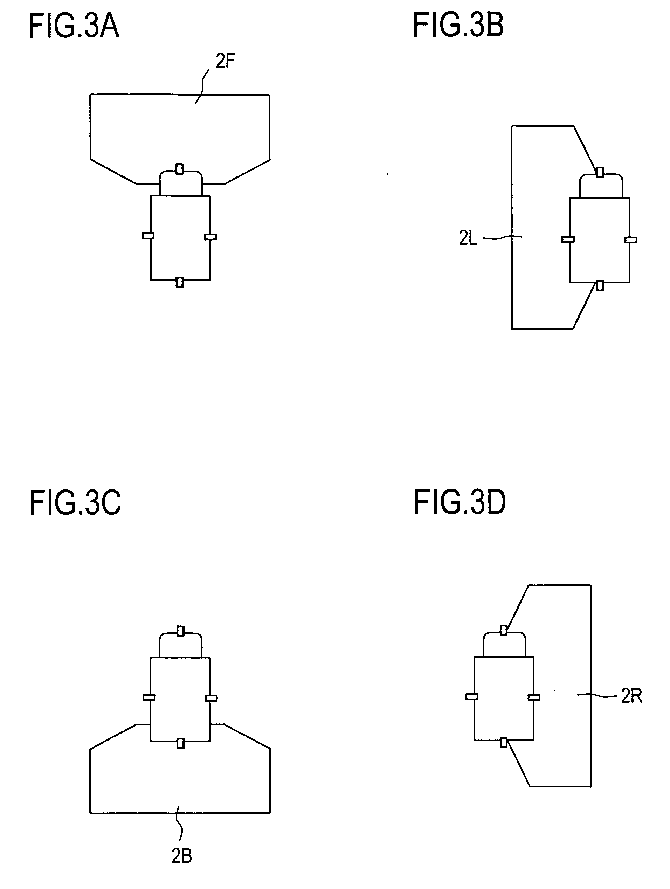

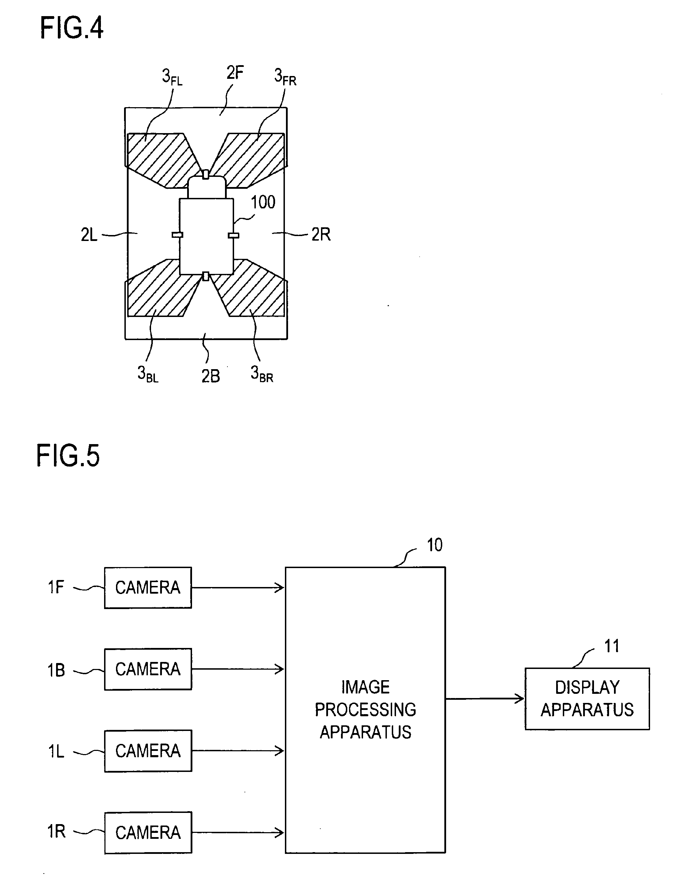

Fig. 2 shows the fields of view - that is, shooting areas - of the cameras. The shooting areas of the cameras 1F, 1R, 1L, and 1B are indicated by 2F, 2R, 2L, and 2B respectively. For the shooting areas 2R and 2B, only parts of them are shown in Fig. 2. Figs. 3A to 3D show the shooting areas 2F, 2L, 2B, and 2R as seen from above, that is, the shooting areas 2F, 2L, 2B, and 2R on the ground. Fig. 4 collectively shows the shooting areas shown in Figs. 3A to 3D (what the hatching there indicates will be described later).

The camera 1F shoots a subject (including the surface of the road) located within a predetermined area in front of the vehicle 100. The camera 1R shoots a subject located within a predetermined area on the right of the vehicle 100. The camera 1L shoots a subject located within a predetermined area on the left of the vehicle 100. The camera 1 B shoots a subject located within a predetermined area behind the vehicle 100.

The cameras 1F and 1L both shoot in a predetermined area situated obliquely at the left front of the vehicle 100. That is, in this predetermined area situated obliquely at the left front of the vehicle 100, the shooting areas 2F and 2L overlap. An area in which the shooting areas of two cameras overlap is called a common shooting area (common shooting space). Specifically, the area in which the shooting areas of the cameras 1F and 1L overlap (that is, the common shooting area shared between the cameras 1F and 1L) is indicated by $3_{FL}$. In Fig. 4, such common shooting areas are represented by hatched areas.

Likewise, as shown in Fig. 4, the shooting areas 2F and 2R overlap in a predetermined area situated obliquely at the right front of the vehicle 100, forming a common shooting area $3_{FR}$; the shooting areas 2B and 2L overlap in a predetermined area situated obliquely at the left back of the vehicle 100, forming a common shooting area $3_{BL}$; and the shooting areas 2B and 2R overlap in a predetermined area situated obliquely at the right back of the vehicle 100, forming a common shooting area $3_{BR}$.

Fig. 5 is a block diagram showing the configuration of a field-of-view assistance system according to an embodiment of the invention. The cameras 1F, 1R, 1L, and 1B shoot, and feed the signals representing the images obtained as the result (henceforth also referred to as the "shot images") to an image processing apparatus 10. The image processing apparatus 10 converts the shot images to bird's-eye view images by point-of-view conversion, and then merges the bird's-eye view images together into a single all-around bird's-eye view image. This all-around bird's-eye view image is displayed as a video image on a display apparatus 11.

It is here assumed that the shot images, from which the bird's-eye view images are produced, are first subjected to image processing such as correction of lens-induced distortion and are then converted into the bird's-eye view images. In practice, based on conversion parameters, which will be described later, the points on the individual shot images are converted directly into the points on the all-around bird's-eye view image, and therefore no individual bird's-eye view images are produced in reality (of course, the all-around bird's-eye view image may be produced via individual bird's-eye view images). When the all-around bird's-eye view image is produced by image merging, the images corresponding to the common shooting areas are produced by averaging the pixel values between the relevant images, or by putting together the relevant images along previously defined merging border lines. In either case, image merging is performed such that individual bird's-eye view images are joined together smoothly at their seams.

In a bird's-eye view image, an image actually shot with a camera (for example, the camera 1F) is converted into an image as if viewed from the point of view (virtual viewpoint) of a virtual camera. More specifically, in a bird's-eye view image, an image actually shot with a camera is converted into an image that would be obtained when the ground were viewed vertically down from above. This type of image conversion is generally called point-of-view conversion. Displaying an all-around bird's-eye view image - an image having a plurality of such bird's-eye view images merged together - assists the driver of a vehicle by enhancing his field of view around the vehicle, and makes it easy to check for safety around the vehicle.

The cameras 1F, 1R, 1L, and 1B are each realized with, for example, a camera employing a CCD (charge-coupled device) or a camera employing a CMOS (complementary metal oxide semiconductor). The image processing apparatus 10 is realized with, for example, an integrated circuit. The display apparatus 11 is realized with, for example, a liquid crystal display panel. A display apparatus incorporated in a car navigation system or the like may be shared as the display apparatus 11 of the field-of-view assistance system. The image processing apparatus 10 may be incorporated in, as part of, a car navigation system. The image processing apparatus 10 and the display apparatus 11 are installed, for example, near the driver's seat in the vehicle 100.

To assist in the check for safety in a wide field of view, each camera is given an accordingly wide angle of view. Thus, the shooting area of each camera has an area of about 5 m x 10 m (meters) on the ground.

Producing an all-around bird's-eye view image requires conversion parameters according to which to convert individual shot images to an all-around bird's-eye view image. Prior to actual operation, the image processing apparatus 10 performs calibration processing to calibrate conversion parameters; then, in actual operation, by use of the thus calibrated conversion parameters, the image processing apparatus 10 produces an all-around bird's-eye view image from individual shot images. In this embodiment, the calibration processing has distinctive features. Henceforth, the description mainly deals with this calibration processing.

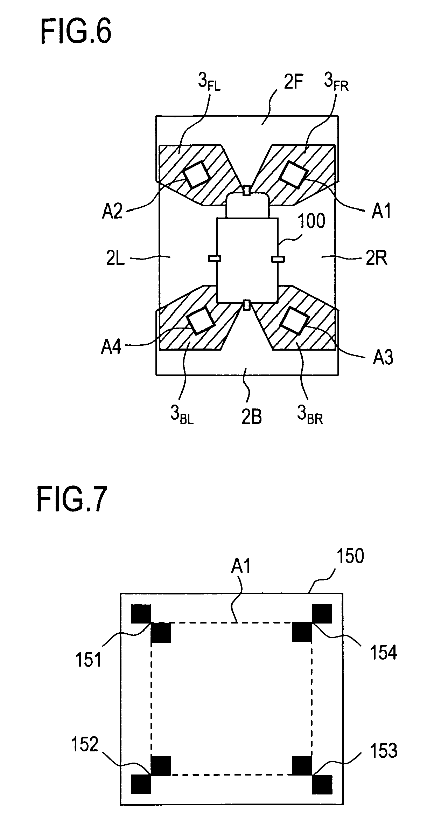

In the calibration processing, a calibration pattern smaller than the shooting area of each camera is arranged in each common shooting area. Fig. 6 is a plan view of and around the vehicle 100, and shows how calibration patterns are arranged.

As shown in Fig. 6, in the common shooting areas $3_{FR}$, $3_{FL}$, $3_{BR}$, and $3_{BL}$ are respectively arranged planer (two-dimensional) calibration patterns A1, A2, A3, and A4. The calibration patterns A1, A2, A3, and A4 are arranged on the ground.

The calibration patterns A1, A2, A3, and A4 are each square in shape, each side measuring about 1 m to 1.5 m. The calibration patterns A1, A2, A3, and A4 do not necessarily have to be given an identical shape; here, however, for the sake of convenience of description, it is assumed that they all have an identical shape. The concept of "shape" here includes "size". Thus, the calibration patterns A1, A2, A3, and A4 are identical in both shape and size. On any bird's-eye view image, ideally, the calibration patterns A1, A2, A3, and A4 should all appear square.

Since each calibration pattern is square in shape, it has four characteristic points. In the example under discussion, the four characteristic points correspond to the four vertices of the square. The image processing apparatus 10 previously recognizes the shape of each calibration pattern as previously known information. With this previously known information, it is possible to identify, for each calibration pattern (A1, A2, A3, and A4), the ideal positional relationship of its four characteristic points relative to one another on the all-around bird's-eye view image (on a global coordinate system, which will be described later) and on the bird's-eye view images.

The shape of a calibration pattern is the shape of the geometric figure formed when the characteristic points included in that calibration pattern are connected together. For example, four calibration plates each square in shape are in their respective entireties dealt with as the four calibration patterns A1 to A4, and the four corners of each calibration plate are dealt with as the four characteristic points of the corresponding calibration pattern. Alternatively, for example, a calibration plate with the calibration pattern A1 drawn on it, a calibration plate with the calibration pattern A2 drawn on it, a calibration plate with the calibration pattern A3 drawn on it, and a calibration plate with the calibration pattern A4 drawn on it are prepared. In this case, the exterior shapes of the calibration plates themselves differ from the exterior shapes of the calibration patterns. As an example, Fig. 7 shows a plan view of a square calibration plate 150 having a calibration pattern A1 drawn on it. The calibration plate 150 has a white background and, in each of the four corners of the calibration plate 150, two solid black squares are drawn that are connected together at one vertex of each. The points 151 to 154 at which such two solid black squares are connected together in the four corners of the calibration plate 150 correspond to the characteristic points of the calibration pattern A1.

The color of the calibration plates themselves and the color of the patterns drawn on them are selected appropriately so that each camera (and the image processing apparatus 10) can surely distinguish and recognize the individual characteristic points on the calibration patterns from the surface of the ground and the like. In the following description of this embodiment, however, for the sake of convenience of illustration and description, the calibration plates are ignored, and the calibration patterns alone will be considered.

Each calibration pattern is arranged to lie within the corresponding common shooting area, but where to arrange the former within the latter is arbitrary. Specifically, for example, so long as the calibration pattern A1 lies within the common shooting area $3_{FR}$, where to arrange the calibration pattern A1 within the common shooting area $3_{FR}$ is arbitrary, and can thus be determined independently of where to arrange the calibration patterns A2 to A4. The same is true with the calibration patterns A2 to A4. Thus, a person who is going to perform the calibration processing simply has to arrange the calibration patterns inside the corresponding common shooting areas without paying any further attention to their arrangement positions.

Principles of a Method for Calibration Processing: Next, the principles of a method for calibration processing according to an embodiment of the invention will be described. In the course, the correspondence among the points on shot images, the points on bird's-eye view images, and the points on an all-around bird's-eye view image will be explained.

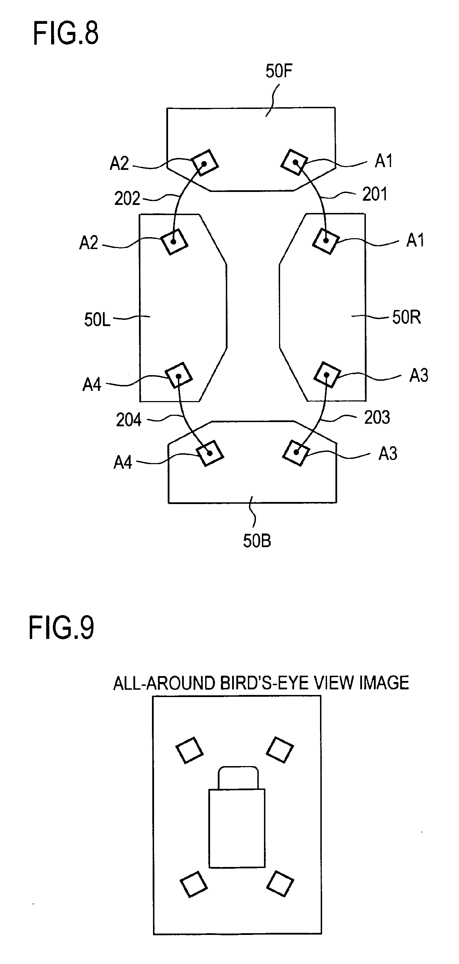

The coordinates of a point on images shot with the cameras 1F, 1R, 1L, and 1B are represented by $(x_1, y_1)$, $(x_2, y_2)$, $(x_3, y_3)$, and $(x_4, y_4)$ respectively. Fig. 8 shows bird's-eye view images corresponding to images shot with the cameras. The bird's-eye view images corresponding to the images shot with the cameras 1F, 1R, 1L, and 1B are indicated by 50F, 50R, 50L, and 50B respectively. The bird's-eye view images shown in Fig. 8 include the calibration patterns A1 to A4 as they appear on those bird's-eye view images.

The coordinates of a point on the bird's-eye view images 50F, 50R, 50L, and 50B are represented by $(X_1, Y_1)$, $(X_2, Y_2)$, $(X_3, Y_3)$, and $(X_4, Y_4)$ respectively. The correspondence between coordinates $(x_n, y_n)$ on the shot images and coordinates $(X_n, Y_n)$ on the bird's-eye view images is expressed, by use of a homography matrix $H_n$, by formula (1) below. Here, n is 1, 2, 3, or 4, and represents the number of the relevant camera. The a homography matrix $H_n$ can be found by planar projection conversion or perspective projection conversion. The homography matrix $H_n$ is a three-row, three-column matrix, and its individual elements are represented by $h_{n1}$ to $h_{n9}$. Here, it is assumed that $h_{n9} = 1$ (the matrix is normalized such that $h_{n9} = 1$). Based on formula (1), the correspondence between coordinates $(x_n, y_n)$ and coordinates $(X_n, Y_n)$ can also be expressed by formulae (2a) and (2b) below.

$$\begin{pmatrix} X_n \\ Y_n \\ 1 \end{pmatrix} = H_n \begin{pmatrix} x_n \\ y_n \\ 1 \end{pmatrix} = \begin{pmatrix} h_{n1} & h_{n2} & h_{n3} \\ h_{n4} & h_{n5} & h_{n6} \\ h_{n7} & h_{n8} & h_{n9} \end{pmatrix} \begin{pmatrix} x_n \\ y_n \\ 1 \end{pmatrix}$$
$$= \begin{pmatrix} h_{n1} & h_{n2} & h_{n3} \\ h_{n4} & h_{n5} & h_{n6} \\ h_{n7} & h_{n8} & 1 \end{pmatrix} \begin{pmatrix} x_n \\ y_n \\ 1 \end{pmatrix} \tag{1}$$

$$X_n = \frac{h_{n1} x_n + h_{n2} y_n + h_{n3}}{h_{n7} x_n + h_{n8} y_n + 1} \tag{2a}$$

$$Y_n = \frac{h_{n4} x_n + h_{n5} y_n + h_{n6}}{h_{n7} x_n + h_{n8} y_n + 1} \tag{2b}$$

The calibration processing divides into an initial calibration stage and an adjustment stage. At the initial calibration stage, the individual bird's-eye view images are subjected to coordinate conversion by rigid body conversion such that the coordinates of mutually corresponding calibration patterns on the all-around bird's-eye view image largely coincide. Specifically, for example, the bird's-eye view images 50F and 50R are subjected to position adjustment by rigid body conversion such that the calibration pattern A1 on the bird's-eye view image 50F and the calibration pattern A1 on the bird's-eye view image 50R coincide (see Fig. 8). Rigid body conversion is achieved through translation and rotation.

In Fig. 8, the curves 201, 202, 203, and 204 indicate the correspondence between calibration patterns on different bird's-eye view images, and conceptually illustrates the rigid body conversion performed at each relevant place. The image processing apparatus 10 previously recognizes the correspondence between the calibration patterns and characteristic points acquired by different cameras. Specifically, for example, the image processing apparatus 10 previously recognizes which calibration patterns and characteristic points included in the image shot with the camera 1F correspond to which calibration patterns and characteristic points included in the image shot with the camera 1R (or 1L). The same is true between the other cameras. This makes rigid body conversion as described above possible.

The translation matrices expressing the translation to be performed on the bird's-eye view images 50F, 50R, 50L, and 50B are represented by $T_1$, $T_2$, $T_3$, and $T_4$ respectively, and the rotation matrices expressing the rotation to be performed on the bird's-eye view images 50F, 50R, 50L, and 50B are represented by $R_1$, $R_2$, $R_3$, and $R_4$ respectively.

Moreover, the coordinates of a point on the all-around bird's-eye view image are represented by (X', Y'). Then, the coordinates $(x_n, y_n)$ of a point on a shot image are converted to the coordinates (X', Y') of a point on the all-around bird's-eye view image by use of a homography matrix $H_n'$ according to formulae (3a) and (3b) below. Here, the translation matrix $T_n$ and the rotation matrix $R_n$ are expressed by formulae (4a) and (4b) below. Moreover, the individual elements of the homography matrix $H_n'$ are expressed by formula (5) below.

$$\begin{pmatrix} X' \\ Y' \\ 1 \end{pmatrix} = H_n' \begin{pmatrix} x_n \\ y_n \\ 1 \end{pmatrix} \tag{3a}$$

$$H_n' = T_n R_n H_n \tag{3b}$$

$$T_n = \begin{pmatrix} 1 & 0 & t_{n1} \\ 0 & 1 & t_{n2} \\ 0 & 0 & 1 \end{pmatrix} \tag{4a}$$

$$R_n = \begin{pmatrix} r_{n1} & r_{n2} & 0 \\ r_{n3} & r_{n4} & 0 \\ 0 & 0 & 1 \end{pmatrix} \tag{4b}$$

$$H_n' = \begin{pmatrix} h_{n1}' & h_{n2}' & h_{n3}' \\ h_{n4}' & h_{n5}' & h_{n6}' \\ h_{n7}' & h_{n8}' & 1 \end{pmatrix} \tag{5}$$

The coordinate system (coordinates) on the all-around bird's-eye view image is called the global coordinate system (global coordinates). Unlike the coordinate systems within the shot images and bird's-eye view images, the global coordinate system is a coordinate system defined to be common to all the cameras.

Each homography matrix $H_n{}'$ is found at the initial calibration stage. In the process of projecting a shot image onto the ground to produce a bird's-eye view image, however, various error factors produce projection errors (positional errors from ideal projection positions). To cope with this, after each homography matrix $H_n{}'$ is found at the initial calibration stage, then at the adjustment stage, the individual elements (8 x 4 elements) of each of $H_1{}'$ to $H_4$ are optimized. The optimization is achieved, for example, by minimizing the projection errors of the characteristic points in each calibration pattern. By optimizing each homography matrix in this way, it is possible to obtain an accurate all-around bird's-eye view image in which its component images are merged together smoothly at their borders. Fig. 9 shows an example of the thus produced all-around bird's-eye view image. As shown in Fig. 9, an image having an image of the vehicle 100 fitted in the produced all-around bird's-eye view image is displayed on the display apparatus 11 shown in Fig. 5.

The calibration processing described above will now be explained more specifically by way of practical examples, namely Examples 1 to 4. Unless inconsistent, any feature in one of these practical examples is applicable to any other.

Example 1

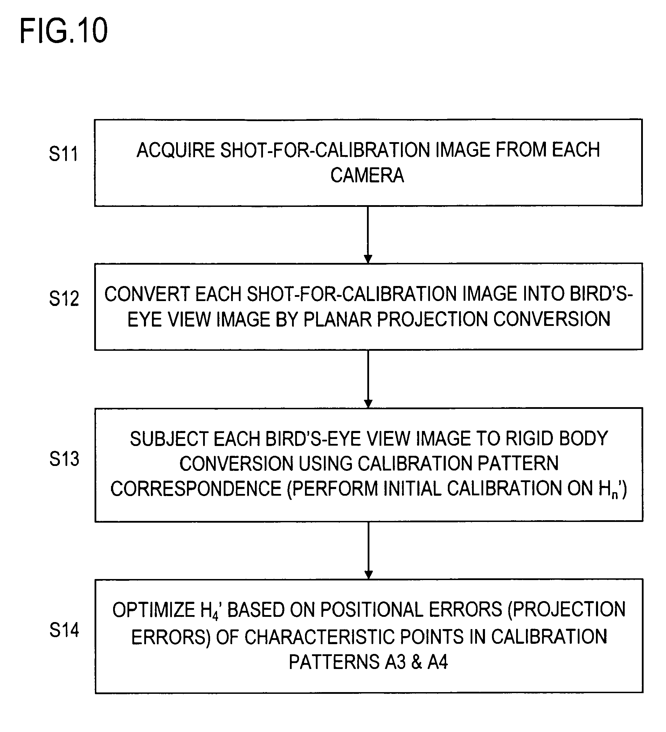

First, Example 1 will be described. Fig. 10 is a flow chart showing the procedure of the calibration processing in Example 1. In Example 1, the calibration processing includes operations in steps S11 to S 14, with step S11 executed by each camera and the image processing apparatus 10, and steps S 12 to S 14 executed by the image processing apparatus 10.

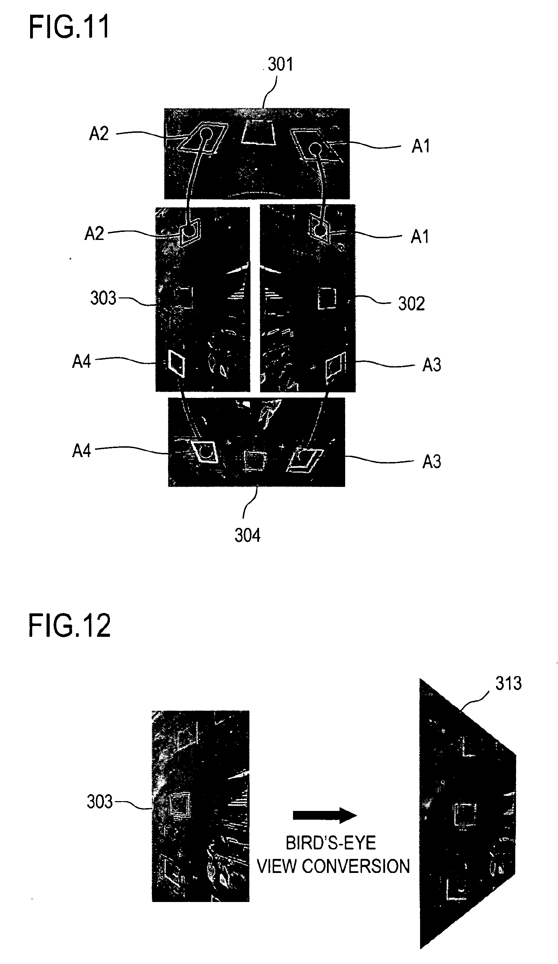

First in step S11, with the calibration patterns arranged within the corresponding common shooting areas as described previously (see Fig. 6), the cameras shoot them, and the image processing apparatus 10 acquires shot images from the cameras respectively. The shot images acquired here will henceforth be specially called the "shot-for-calibration images". Fig. 11 shows an example of the thus acquired shot-for-calibration images. In Fig. 11, reference signs 301, 302, 303, and 304 indicate the shot-for-calibration images from the cameras 1F, 1R, 1L, and 1B respectively.

Next, in step S12, by planar projection conversion, bird's-eye view conversion is performed on the individual shot-for-calibration images. Here, bird's-eye view conversion denotes processing for converting shot images (including shot-for-calibration images) to bird's-eye view images. As an example, Fig. 12 shows a bird's-eye view image 313 obtained by performing bird's-eye view conversion on a shot-for-calibration image 303. As mentioned previously, it is here assumed that shot images (including shot-for-calibration images), from which bird's-eye view images are produced, are first subjected to image processing such as correction of lens-induced distortion and are then converted into bird's-eye view images.

In step S12, the homography matrix $H_n$ for converting the shot-for-calibration images into bird's-eye view images is found. Now, the method for finding the homography matrix $H_1$ will be described.

The image processing apparatus 10 performs edge detection or the like on the shot-for-calibration image from the camera 1F and thereby identifies the coordinates of the four characteristic points of the calibration pattern A1 on the shot-for-calibration image from the camera 1F. The thus identified coordinates of the four points are represented by $(x_{A1a}, y_{A1a})$, $(x_{A1b}, y_{A1b})$, $(x_{A1c}, y_{A1c})$, and $(x_{A1d}, y_{A1d})$. Moreover, according to the previously known information it previously recognizes, the image processing apparatus 10 determines the coordinates of the four characteristic points of the calibration pattern A1 on the bird's-eye view image corresponding to the camera 1F. The thus defined coordinates of the four points are represented by $(X_{A1a}, Y_{A1a})$, $(X_{A1b}, Y_{A1b})$, $(X_{A1c}, Y_{A1c})$, and $(X_{A1d}, Y_{A1d})$. Since the calibration pattern A1 is square in shape, the coordinates $(X_{A1a}, Y_{A1a})$, $(X_{A1b}, Y_{A1b})$, $(X_{A1c}, Y_{A1c})$, and $(X_{A1d}, Y_{A1d})$ can be defined to be, for example, (0, 0), (1, 0), (0, 1), and (1, 1).

When the correspondence between the coordinates of the four points between the shot-for-calibration image and the bird's-eye view image is known, then it is possible to find the homography matrix $H_1$. To find a homography matrix (projection conversion matrix) based on the correspondence of the coordinates of four points, one of generally known methods is used, and therefore no detailed description will be given in this respect. For example, it is possible to use the methods described in JP-A-2004-342067 is used (see, among others, the one described in paragraphs [0059] to [0069]).

Although the above description deals with an example in which the homography matrix $H_1$ is found based on the coordinates of the four characteristic points of the calibration pattern A1, it is also possible to find the homography matrix $H_1$ based on the coordinates of the four characteristic points of the calibration pattern A2. For the sake of convenience of description, the method for finding the homography matrix $H_1$ based on the four characteristic points of either the calibration pattern A1 or A2 has been described first; it is, however, preferable to find the homography matrix $H_1$ based on the coordinates of a total of eight characteristic points of both the calibration patterns A1 and A2.

On the bird's-eye view image obtained through conversion according to the homography matrix $H_1$ based on the four characteristic points of the calibration pattern A1 (or A2) alone, the calibration pattern A1 (or A2) appears precisely square as previously known; on the other hand, the calibration pattern A2 (or A1) usually does not appear square. This is ascribable to coordinate errors and the like of the characteristic points identified on the shot-for-calibration images. By contrast, on the bird's-eye view image obtained through conversion according to the homography matrix $H_1$ based on the eight characteristic points of both the calibration patterns A1 and A2, projection errors diffuse over both the calibration patterns A1 and A2. In a case where the coordinates of the eight characteristic points of the calibration patterns A1 and A2 are used, it is advisable to find the homography matrix $H_1$ such that the sum total of the projection errors of all the characteristic points is minimized.

The method for calculating a homography matrix has been described with regard to $H_1$. The other homography matrices $H_2$ to $H_4$ are calculated likewise. Once the homography matrix $H_n$ is found, any point on a shot-for-calibration image can be converted to a point on a bird's-eye view image according to formulae (2a) and (2b) above.

Subsequently to step S12, in step S13, the individual bird's-eye view images obtained in step S12 are subjected to position adjustment by rigid body conversion (translation and rotation) such that the coordinates of mutually corresponding calibration patterns coincide. It is assumed that the bird's-eye view images obtained through bird's-eye view conversion of the shot-for-calibration images from the cameras 1F, 1R, 1L, and 1B are the bird's-eye view images 50F, 50R, 50L, and 50B, respectively, shown in Fig. 8.

Specifically, with respect to the bird's-eye view image 50F, the bird's-eye view image 50R is subjected to rigid body conversion such that the calibration pattern A1 on the bird's-eye view image 50F and the calibration pattern A1 on the bird's-eye view image 50R coincide, and also the bird's-eye view image 50L is subjected to rigid body conversion such that the calibration pattern A2 on the bird's-eye view image 50F and the calibration pattern A2 on the bird's-eye view image 50L coincide. Furthermore, thereafter, the bird's-eye view image 50B is subjected to rigid body conversion such that the calibration patterns A3 and A4 on the bird's-eye view image 50B and the calibration patterns A3 and A4 on the bird's-eye view images 50R and 50L after rigid body conversion coincide. Then, from the translation matrix $T_n$ and the rotation matrix $R_n$ used in rigid body conversion performed at each place, the homography matrix $H_n{'}$ is calculated (see formula (3b) etc. above). The homography matrix $H_n{'}$ calculated here can be regarded as the initial value of the homography matrix $H_n{'}$ to be definitively found, and is then optimized in the next step, S14. That is, in step S13, initial calibration of homography matrices is performed.

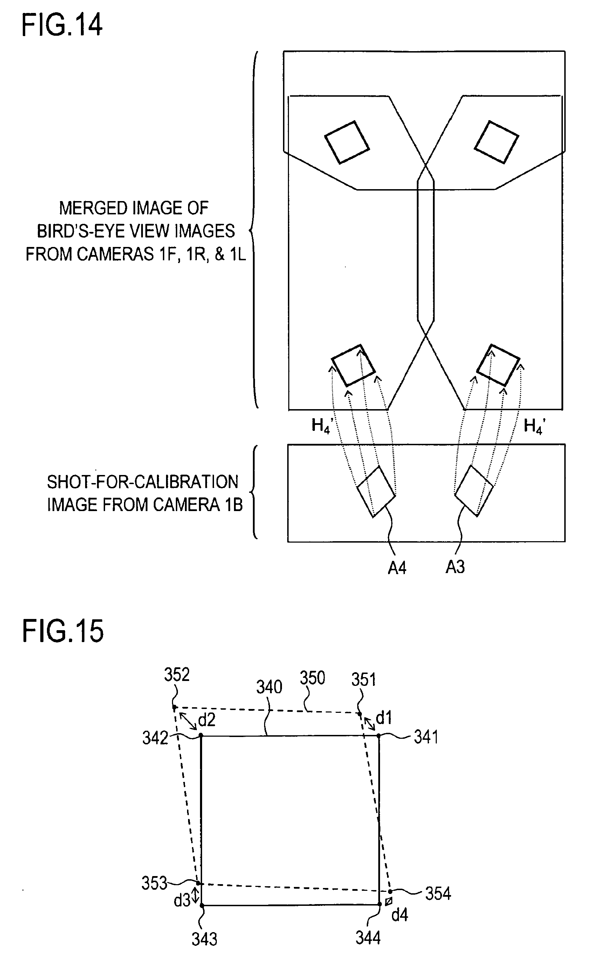

In often occurs that the shapes of calibration patterns that should coincide after rigid body conversion do not appear square as previously known and thus do not coincide. In that case, rigid body conversion is so performed as to make minimal the sum total of the positional errors between mutually corresponding characteristic points (in the example shown in Fig.15, which will be described later, (d1 + d2 + d3 + d4)). In a case where, with respect to the bird's-eye view image 50F, the other bird's-eye view images are subjected to rigid body conversion as described above, the homography matrices $H_1$ and $H_1{'}$ for the bird's-eye view image 50F are identical.

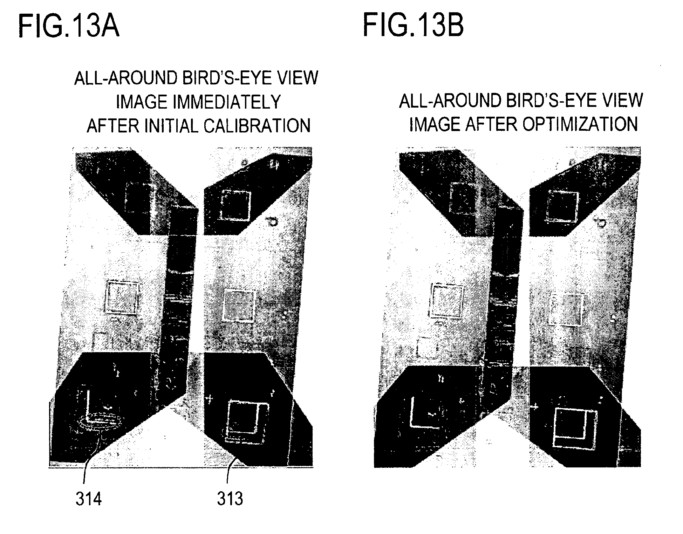

Fig. 13A shows the image merged as the result of the rigid body conversion in step S13, that is, the all-around bird's-eye view image immediately after initial calibration. In Fig. 13A (and also in Fig. 13B, which will be described later), the top part of the diagram corresponds to the bird's-eye view image 50F, and the bottom part of the diagram corresponds to the bird's-eye view image 50B. As seen in the parts indicated by reference signs 313 and 314, the calibration patterns A3 and A4 each appear doubly. This is because, through rigid body conversion as described above, errors accumulate in the bird's-eye view image 50B definitively merged.

To cope with this, in step S14, the homography matrix $H_4{'}$ for the camera 1B is, alone, optimized. Specifically, on the assumption that no errors are included in the coordinate positions of the calibration patterns A3 and A4 on the bird's-eye view images 50R and 50L after rigid body conversion, a homography matrix is found that permits, as shown in Fig. 14, the coordinates of the individual characteristic points of the calibration patterns A3 and A4 on the shot-for-calibration image from the camera 1B to be converted to the coordinates of the individual characteristic points of the calibration patterns A3 and A4 on the bird's-eye view images 50R and 50L after rigid body conversion. Then, the thus found homography matrix is dealt with the definitive homography matrix $H_4{'}$.

For the sake of convenience of description, it has been described that, in step S13, the bird's-eye view image 50B is subjected to rigid body conversion to find the initial value of the homography matrix $H_4{'}$. As will be understood from the operation performed in step S14, however, in Example 1, it is not really necessary to calculate the homography matrix $H_4{'}$ at the stage of step S 13.

Fig. 13B shows the all-around bird's-eye view image produced by use of the homography matrix $H_n{'}$ having undergone the optimization in step S14. One will see that, in Fig. 13B, the double appearance etc. observed in the all-around bird's-eye view image shown in Fig. 13A has been alleviated.

A supplementary explanation of the operation in step S14 will now be given. Through bird's-eye view conversion and rigid body conversion, the points on each shot-for-calibration image are converted to points on the global coordinate system. It is assumed that, as the result of the individual characteristic points of the calibration pattern A3 on the shot-for-calibration image from the camera 1R being projected onto the global coordinate system according to the homography matrix $H_2{'}$, the calibration pattern A3 corresponding to the camera 1R describes a quadrangle 340 as shown in Fig. 15 on the global coordinate system. It is also assumed that, as the result of the individual characteristic points of the calibration pattern A3 on the shot-for-calibration image from the camera 1B being projected onto the global coordinate system according to the homography matrix $H_4$', the calibration pattern A3 corresponding to the camera 1B describes a quadrangle 350 as shown in Fig. 15 on the global coordinate system. The quadrangle 340 is formed by four vertices 341 to 344 corresponding to the projected points of the four characteristic points on the global coordinate system, and the quadrangle 350 is formed by four vertices 351 to 354 corresponding to the projected points of the four characteristic points on the global coordinate system. It is further assumed that the vertices 341, 342, 343, and 344 corresponds to the vertices 351, 352, 353, and 354 respectively.

On the global coordinate system, the positional error between the vertices 341 and 351, the positional error between the vertices 342 and 352, the positional error between the vertices 343 and 353, and the positional error between the vertices 344 and 354 are represented by d1, d2, d3, and d4 respectively. A positional error is the distance between compared vertices. For example, the positional error d1 is the distance between the vertices 341 and 351. The same is true with the positional errors d2 to d4. Positional errors like these also occur with respect to the calibration pattern A4 between the cameras 1L and 1B.

In view of the foregoing, for the optimization of the homography matrix $H_4$', the four positional errors with respect to the calibration pattern A3 and the four positional errors with respect to the calibration pattern A4 are referred to. The sum total of these eight positional errors in total is referred to as the error evaluation value $D_A$. Since a positional error is the distance between compared vertices, it always takes a zero or positive value. The error evaluation value $D_A$ is calculated according to formula (6) below. In the right side of the formula (6), the left-hand $\Sigma$ - the one preceding the right-hand $\Sigma$ representing the sum (d1 + d2 + d3 + d4) - denotes calculating the sum total with as many calibration patterns as are referred to.

$$D_A = \sum \sum_{i=1}^{4} di \qquad\qquad (6)$$

In step S 14, the homography matrix $H_4$ is found that makes the error evaluation value $D_A$ minimal. More specifically, the homography matrix $H_4$' is adjusted through repeated calculations until the error evaluation value $D_A$ becomes equal to or less than a predetermined threshold value.

The homography matrix $H_1$' to $H_3$' calculated in step S13 in Fig. 10 and the homography matrix $H_4$' definitively calculated in step S 14 are dealt with as the calibrated conversion parameters for producing an all-around bird's-eye view image from shot images. Thereafter, the calibration processing shown in Fig. 10 is ended.

In practice, for example, based on the calibrated conversion parameters, table data is created that indicates the correspondence between coordinates $(x_n, y_n)$ on shot images and coordinates (X', Y') on an all-around bird's-eye view image, and the table data is stored in an unillustrated memory (lookup table). By use of this table data, an all-around bird's-eye view image can be produced from shot images from the individual cameras, with satisfactorily small projection errors included in the resulting all-around bird's-eye view image. In this case, the table data may be regarded as the calibrated conversion parameters.

To detect characteristic points in a given image, an automatic detection method employing image processing as described above may be adopted; instead, a manual detection method may be adopted that relies on manual operations made on an operated portion (unillustrated). To minimize the error evaluation value $D_A$, one of generally known methods is used. For example, it is possible to use a multiple-dimensional downhill simplex method, the Powell method, or the like (see, for example, "Numerical Recipes in C" by William H. Press et al., Gijutsu-Hyoron-Sha, 1993). Since these methods are well known, no description of any will be given here.

After the calibration processing shown in Fig. 10, by use of the calibrated conversion parameters, the image processing apparatus 10 shown in Fig. 5 converts the shot images obtained from the individual cameras one set after another to one all-around bird's-eye view image after another. The image processing apparatus 10 feeds the video signal representing one all-around bird's-eye view image after another to the display apparatus 11. The display apparatus 11 thus displays the all-around bird's-eye view images as a moving image.

As described above, in Example 1, first, images shot with the cameras 1F, 1R, and 1L are projected by planar projection conversion, and the resulting bird's-eye view images are then subjected to position adjustment such that common calibration patterns coincide, in order to thereby find homography matrices $H_1$' to $H_3$' for subjecting the images shot with the cameras 1F, 1R, and 1L to coordinate conversion onto a global coordinate system. Next, by use of the homography matrices $H_2$' and $H_3$', calibration patterns A3 and A4 shot with the cameras 1R and 1L are subjected to coordinate conversion onto the global coordinate system. Then, based on coordinate information on the calibration patterns A3 and A4 on the global coordinate system as obtained through the coordinate conversion and based on coordinate information on the calibration patterns A3 and A4 shot with the camera 1B (coordinate information on a shot-for-calibration image), a homography matrix $H_4'$ is found such that the arrangements of common calibration patterns largely coincide on the global coordinate system (see Fig 14). The homography matrices $H_1'$ to $H_3'$ found first and the homography matrix $H_4'$ found thereafter are together regarded as calibrated conversion parameters. In this case, the image processing apparatus 10 includes a first parameter deriver for finding homography matrices $H_1'$ to $H_3'$ as first parameters and a second parameter deriver for finding a homography matrix $H_4'$ as second parameters.

With Example 1, a person who is going to perform calibration processing simply has to arrange calibration patterns inside the corresponding common shooting areas without paying any further attention to their arrangement positions. Moreover, each calibration pattern can be made significantly smaller than the overall shooting area of all cameras or even the shooting area of each camera. This helps simplify the setting-up of a calibration environment. Moreover, there is no need for camera external information, such as the angle and height at which a camera is installed, or camera internal information, such as the focal length of the camera. This contributes to simplified calibration operation. Furthermore, adjustment processing as in step S14 makes it possible to merge a plurality of images together smoothly at their seams.

Example 2

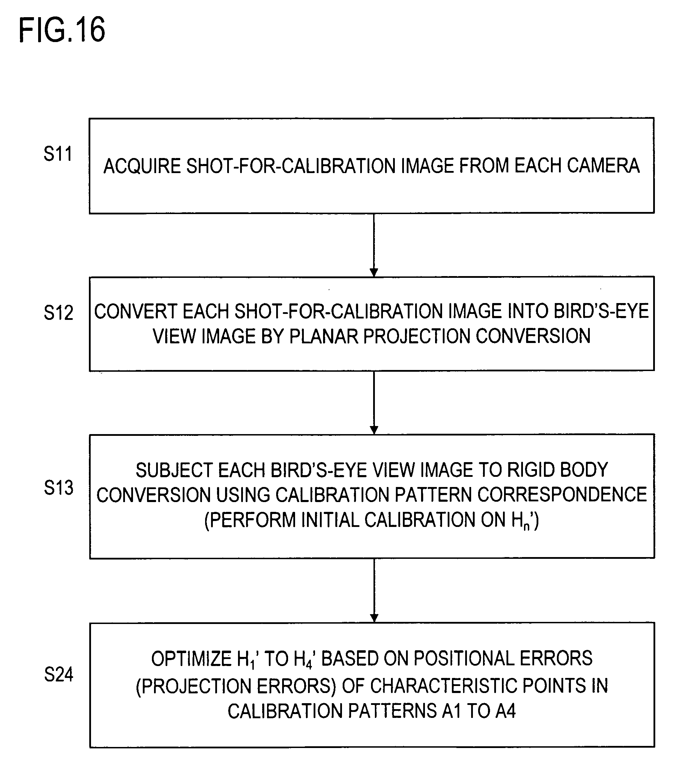

Next, Example 2 will be described. Fig. 16 is a flow chart showing the procedure of the calibration processing in Example 2. In Example 2, the calibration processing includes operations in steps S 11 to S 13 and an operation in step S24. The operations in steps S 11 to S 13 are the same as those in Example 1 (Fig. 10).

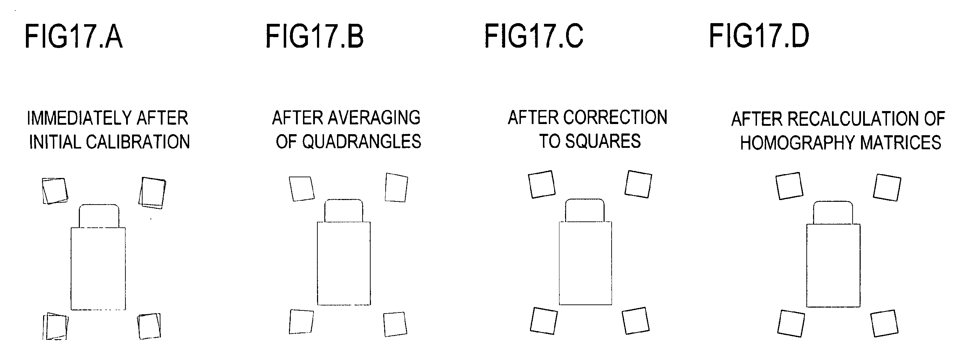

In step S13, the individual bird's-eye view images obtained in step S12 are subjected to position adjustment by rigid body conversion and are merged together such that the coordinates of mutually corresponding calibration patterns coincide. Here, as described previously in connection with Example 1 (see Fig. 15 etc.), due to error factors, the projected points of characteristic points on the merged image (all-around bird's-eye view image) usually do not completely coincide between two cameras. In Example 1, this non-coincidence of projected points is reduced in step S14; in Example 2, the non-coincidence of projected points is reduced in step S24. Figs. 17A to 17D are diagrams schematically showing the flow of the calibration processing shown in Fig. 16, with special attention paid to the operation in step S24.

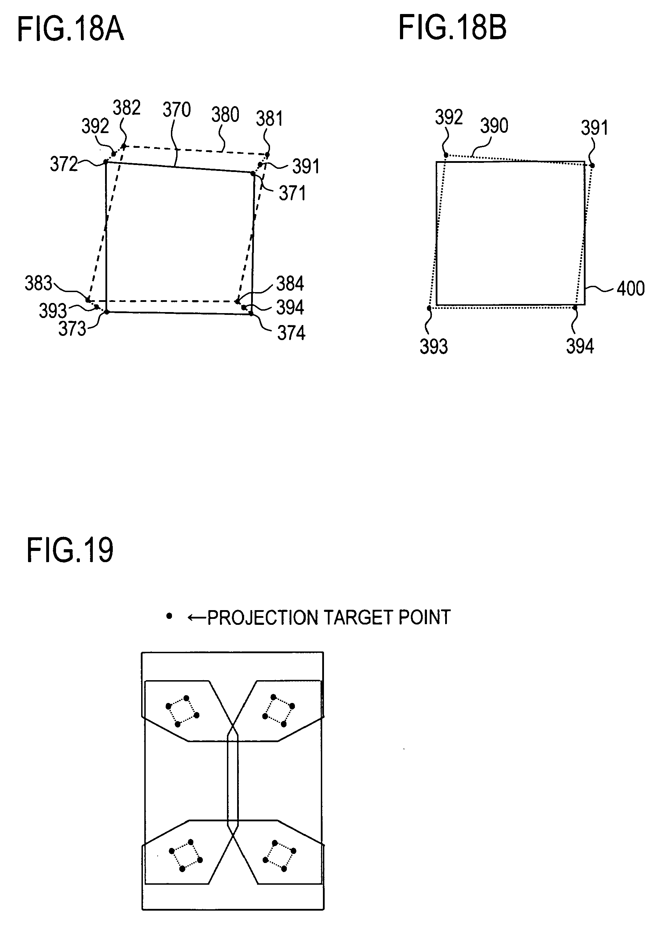

In Example 2, after the bird's-eye view conversion in step S12, then, in step S13, the individual bird's-eye view images are subjected to position adjustment by rigid body conversion, and then an advance is made to step S24. Through the bird's-eye view conversion and the rigid body conversion, the points on the individual shot-for-calibration images are projected onto the corresponding points on the global coordinate system. Fig. 17A shows how the calibration patterns appears on the global coordinate system immediately after the position adjustment in step S13 (immediately after initial calibration). The projected image of the calibration pattern A1 on the global coordinate system as observed immediately after the position adjustment in step S13 is shown in Fig. 18A.

It is assumed that, as the result of the individual characteristic points of the calibration pattern A1 on the shot-for-calibration image from the camera 1F being projected onto the global coordinate system according to the homography matrix $H_1'$ calculated in step S13, the calibration pattern A1 corresponding to the camera 1F describes a quadrangle 370 on the global coordinate system. It is also assumed that, as the result of the individual characteristic points of the calibration pattern A1 on the shot-for-calibration image from the camera 1R being projected onto the global coordinate system according to the homography matrix $H_2'$ calculated in step S 13, the calibration pattern A1 corresponding to the camera 1 R describes a quadrangle 380 on the global coordinate system. The quadrangle 370 is formed by four vertices 371 to 374 corresponding to the projected points of the four characteristic points on the global coordinate system, and the quadrangle 380 is formed by four vertices 381 to 384 corresponding to the projected points of the four characteristic points on the global coordinate system. It is further assumed that the vertices 371, 372, 373, and 374 corresponds to the vertices 381, 382, 383, and 384 respectively.

On the global coordinate system, the image processing apparatus 10 finds the midpoint 391 between the vertices 371 and 381, the midpoint 392 between the vertices 372 and 382, the midpoint 393 between the vertices 373 and 383, and the midpoint 394 between the vertices 374 and 384, and thereby finds a quadrangle 390 having as its four vertices the midpoints 391, 392, 393, and 394. Fig. 18B shows the quadrangle 390. The quadrangle 390 is the average quadrangle of the quadrangles 370 and 380. The appearance at the stage that the average quadrangle has just been calculated is shown in Fig. 17B. Due to error factors, the quadrangles 370, 380, and 390 often do not appear square as previously known.

As described previously, the image processing apparatus 10 previously recognizes the shapes of the calibration patterns as they should ideally appear on the global coordinate system. As shown in Fig. 18B, the image processing apparatus 10 overlays a square 400 with that ideal shape on the quadrangle 390, and finds the position of the square 400 that makes minimal the sum total of the positional errors between the vertices of the quadrangle 390 and the corresponding vertices of the square 400. The sum total of the positional errors is calculated in a similar manner to (d1 + d2 + d3 + d4) between the quadrangles 340 and 350 in Fig. 15. On the global coordinate system, with the center of gravity of the square 400 placed at that of the quadrangle 390, the square 400 is rotated about its center of gravity to search for the above-mentioned minimal total sum. The positions of the four vertices of the square 400 that make the sum total minimal are determined as the projection target points onto which the calibration pattern A1 should be projected.

Likewise, the projection target points onto which the calibration patterns A2 to A4 should be projected are found. Fig. 19 shows the thus found projection target points (16 points in total) onto which the individual characteristic points of the calibration patterns should be projected. In this way, correction is performed such that the shapes of the figures formed by the projection target points appear square. Fig. 17C shows the appearance at the stage that this correction has just been performed.

Thereafter, in step S24, the homography matrix $H_1'$ is recalculated such that the four characteristic points of the calibration pattern A1 on the shot-for-calibration image from the camera 1F are projected onto the four projection target points for the calibration pattern A1 and that the four characteristic points of the calibration pattern A2 on the shot-for-calibration image from the camera 1F are projected onto the four projection target points for the calibration pattern A2. In practice, a homography matrix $H_1'$ that completely fulfills that often cannot be found uniquely; thus, as in the above described optimization of a homography matrix through the calculation of an error evaluation value $D_A$, it is advisable to find the homography matrix $H_1'$ that makes minimal the sum total of the positional errors (a total of eight positional errors occur) between the actually projected points and the projection target points.

Likewise, the homography matrices $H_2'$ to $H_4'$ are recalculated. For example, the homography matrix $H_2'$ is recalculated such that the four characteristic points of the calibration pattern A1 on the shot-for-calibration image from the camera 1R are projected onto the four projection target points for the calibration pattern A1 and that the four characteristic points of the calibration pattern A3 on the shot-for-calibration image from the camera 1R are projected onto the four projection target points for the calibration pattern A3. Fig. 17D shows the all-around bird's-eye view image obtained after the recalculation of all the homography matrices.

The homography matrices $H_1'$ to $H_4'$ definitively obtained through the recalculation in step S24 are dealt with as the calibrated conversion parameters for producing the all-around bird's-eye view image from the shot images. Thereafter, the calibration processing shown in Fig. 16 is ended. In practice, for example, based on the calibrated conversion parameters, table data is created like that described previously in connection with Example 1. In this case, the table data may be regarded as the calibrated conversion parameters.

After the calibration processing shown in Fig. 16, by use of the calibrated conversion parameters, the image processing apparatus 10 shown in Fig. 5 converts the shot images obtained from the individual cameras one set after another to one all-around bird's-eye view image after another. The image processing apparatus 10 feeds the video signal representing one all-around bird's-eye view image after another to the display apparatus 11. The display apparatus 11 thus displays the all-around bird's-eye view images as a moving image.

As described above, in Example 2, first, rigid body conversion is performed such that, between each pair of cameras that shoots a common calibration pattern (that is, individually between the cameras 1F and 1R, between the cameras 1F and 1L, between the cameras 1B and 1L, and between the cameras 1B and 1R), the positions of the common calibration pattern largely coincide on the global coordinate system, to thereby tentatively find the homography matrices $H_1'$ to $H_4'$. Next, by use of the tentative homography matrices $H_1'$ to $H_4'$, the calibration patterns are subjected to coordinate conversion onto the global coordinate system. Then, the homography matrices $H_1'$ to $H_4'$ are optimized through the correction of the shapes of the thus coordinate-converted calibration patterns on the global coordinate system.

Example 2 offers the same benefits as Example 1. The calibration processing according to Example 2 is particularly effective in cases where the accuracy of initial calibration is not high.

Example 3

Next, Example 3 will be described as a practical example for explaining another method of optimizing the homography matrices $H_1'$ to $H_4'$. Example 3 is a modified example of Example 2. The calibration processing in Example 3 proceeds according to the same flow chart (Fig. 16) as in Example 2, and includes operations in steps S 11 to S13 and an operation in step S24. In Example 3, however, the optimization of the homography matrices $H_1'$ to $H_4'$ in step S24 is performed by a method different than in Example 2. Accordingly, the following description focuses on the differences from Example 2 - the method of the optimization in Example 3.

In the embodiments including Example 3, the calibration patterns are square in shape. A square remains identical with respect to rotation, which has one degree of freedom, and with respect to translation, which has two degrees of freedom. Accordingly, whereas a common planar projection conversion matrix has eight degrees of freedom, the homography matrix $H_n$ or $H_n'$ dealt with in Example 3 has five or less degrees of freedom. Furthermore, in Example 3, one side of the calibration pattern A1 on the global coordinate system is fixed. With one side of the calibration pattern A1 on the global coordinate system fixed, by use of coordinate information on the individual characteristic points of the calibration patterns A2 and A3, it is possible to uniquely determine the arrangement positions of the individual bird's-eye view images on the all-around bird's-eye view image. When one side of the calibration pattern A1 on the global coordinate system is fixed, the degrees of freedom of each of the homography matrices $H_1'$ and $H_2'$ are restricted to

four, and the degrees of freedom of each of the homography matrices $H_3'$ and $H_4'$ are restricted to five. In view of this, of all the elements forming the homography matrices $H_1'$ to $H_4'$, only a total of 18 elements $h_{11}'$ to $h_{14}'$, $h_{21}'$ to $h_{24}'$, $h_{31}'$ to $h_{35}'$, and $h_{41}'$ to $h_{45}'$ are dealt with as adjustment target elements (see formula (5) above), and, by optimizing these adjustment target elements, the homography matrices $H_1'$ to $H_4'$ are optimized. Once the values of the adjustment target elements are determined, the other elements ($h_{15}'$ etc.) are uniquely determined.

More specifically, when the individual bird's-eye view images are subjected to position adjustment on the global coordinate system, one side of the calibration pattern A1 on the bird's-eye view image 50F and one side, corresponding to the just-mentioned side, of the calibration pattern A1 on the bird's-eye view image 50R are made to completely coincide, and in addition the coordinate positions of both ends of that one side on the global coordinate system are uniquely determined. That is, the homography matrices $H_1'$ and $H_2'$ are adjusted in that way. Next, the bird's-eye view images 50L and 50B are subjected to position adjustment by rigid body conversion such that, on the global coordinate system, the calibration pattern A2 on the bird's-eye view image 50F and the calibration pattern A2 on the bird's-eye view image 50L coincide (largely coincide) and the calibration pattern A3 on the bird's-eye view image 50R and the calibration pattern A3 on the bird's-eye view image 50B coincide (largely coincide). Thus, the homography matrices $H_3'$ and $H_4'$ are tentatively found.

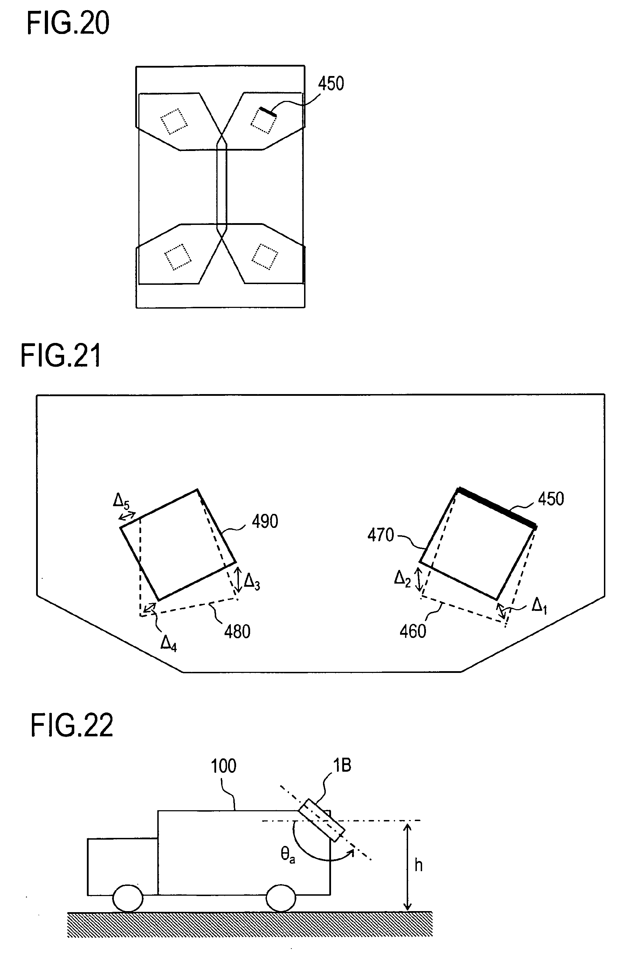

In this way, as shown in Fig. 20, the arrangement positions of the individual bird's-eye view images on the global coordinate system (in other words, on the all-around bird's-eye view image) are uniquely determined. In Fig. 20, the side represented by a solid line indicated by reference sign 450 is the side of which the coordinate positions of both ends on the global coordinate system have been uniquely determined. The length of the side 450 is equal to the length of each side of the previously known square according to previously known information.

By use of, as an initial value, the homography matrix $H_n'$ found through position adjustment as described above, the following adjustment processing is performed.

Fig. 21 shows the image obtained by projecting the shot-for-calibration image from the camera 1F onto the global coordinate system by use of the initial value of the homography matrix $H_1'$ (that is, the bird's-eye view image 50F after the position adjustment described above). In Fig. 21, quadrangles 460 and 480 represent the projected figures into which the calibration patterns A1 and A2, respectively, are actually projected. The side indicated by reference sign 450 is the same as that in Fig. 20. One side of the quadrangle 460 corresponding to the calibration pattern A1 completely coincides with the side 450.

The previously known squares 470 and 490 according to the previously known information are overlaid on the quadrangles 460 and 480 such as to largely coincide with them. Here, as shown in Fig. 21, the following restricting conditions are applied: one side of the square 470 is made to coincide with the side 450; and one vertex of the square 490 is made to coincide with one vertex of the quadrangle 480, and the sides of the square 490 and of the quadrangle 480 which have at their one end the vertices thus made to coincide are made to overlap.

Then, between the quadrangle 460 and the square 470, two vertices coincide, whereas the other two usually do not (but occasionally do). With respect to these two other vertices, the positional errors between mutually corresponding vertices are represented by $\Delta_1$ and $\Delta_2$. On the other hand, between the quadrangle 480 and the square 490, one vertex coincides, whereas the other three usually do not (but occasionally do). With respect to these three other vertices, the positional errors between mutually corresponding vertices are represented by $\Delta_3$, $\Delta_4$, and $\Delta_5$.

Positional errors like these also occur in the image obtained by projecting the shot-for-calibration image from the camera 1R onto the global coordinate system by use of the initial value of the homography matrix $H_2'$. In the image obtained by projecting the shot-for-calibration image from the camera 1L onto the global coordinate system by use of the initial value of the homography matrix $H_3'$, the following restricting conditions are applied: one vertex of the calibration pattern A2 is made to coincide with one vertex of a previously known square, and the sides of the calibration pattern A2 and of the previously known square which have at their one end the vertices thus made to coincide are made to overlap; one vertex of the calibration pattern A4 is made to coincide with one vertex of a previously known square, and the sides of the calibration pattern A4 and of the previously known square which have at their one end the vertices thus made to coincide are made to overlap. Similar processing is performed with respect to the camera 1B as the camera 1L. As a result, with respect to each of the homography matrices $H_1'$ and $H_2'$, which have four degrees of freedom, five positional error occurs, and, with respect to each of the homography matrices $H_3'$ and $H_4'$, which have five degrees of freedom, six positional error occurs. Thus, a total of 22 positional errors occur, as given by 5 x 2 + 6 x 2 = 22.

In Example 3, the sum total of these 22 positional errors in total is taken as an error evaluation value $D_B$, and each homography matrix $H_n$ is optimized such that the error evaluation value $D_B$ is minimized. To minimize the error evaluation value $D_B$, a method similar to that used to minimize the error evaluation value $D_A$ in Example 1 is used.

The optimized homography matrices $H_1'$ to $H_4'$ are dealt with as the calibrated conversion parameters for producing an all-around bird's-eye view image from shot images. Thereafter, the calibration processing according to Example 3 is ended. In practice, for example, based on the calibrated conversion parameters, table data is created like that described previously in connection with Example 1. In this case, the table data may be regarded as the calibrated conversion parameters.

After the calibration processing, by use of the calibrated conversion parameters, the image processing apparatus 10 shown in Fig. 5 converts the shot images obtained from the individual cameras one set after another to one all-around bird's-eye view image after another. The image processing apparatus 10 feeds the video signal representing one all-around bird's-eye view image after another to the display apparatus 11. The display apparatus 11 thus displays the all-around bird's-eye view images as a moving image.

Example 4

In Examples 1 to 3 described above, initial calibration is achieved by planar projection conversion. That is, bird's-eye view conversion is performed by planar projection conversion, and then, by rigid body conversion, the initial value of the homography matrix $H_n'$ is found. Instead of planar projection conversion, perspective projection conversion may be used in initial calibration. How perspective projection conversion is used in such a case will now be described as Example 4.

Perspective projection conversion is generally known (see, for example, JP-2006-287892). A method for converting an image shot with a single camera into a bird's-eye view image by perspective projection conversion will now be described briefly. The coordinates of a point on the shot image are represented by $(x_{bu}, y_{bu})$, and the coordinates of a point on the bird's-eye view image obtained through perspective projection conversion of the shot image are represented by $(x_{au}, y_{au})$. Then, the conversion of coordinates $(x_{bu}, y_{bu})$ to coordinates $(x_{au}, y_{au})$ is performed according to formula (7) below.

$$\begin{bmatrix} x_{au} \\ y_{au} \end{bmatrix} = \begin{bmatrix} \dfrac{x_{bu}(fh\sin\theta_a + H_a y_{au}\cos\theta_a)}{fH_a} \\ \dfrac{fh(f\cos\theta_a - y_{bu}\sin\theta_a)}{H_a(f\sin\theta_a + y_{bu}\cos\theta_a)} \end{bmatrix} \qquad (7)$$

Here, the symbol $\theta_a$ represents, as shown in Fig. 22, the angle between the ground and the optical axis of a camera ($90° < \theta_a < 180°$). In Fig. 22, the camera is assumed to be, for example, the camera 1B. The symbol h represents a quantity based on the height of the camera (the translational displacement, in the direction of height, between the camera coordinate system and the world coordinate system). The symbol f represents the focal length of the camera. As described earlier, in a bird's-eye view image, an image actually shot with the camera is converted into an image as if viewed from the point of view (virtual viewpoint) of a virtual camera. The symbol $H_a$ represents the height of this virtual camera. The values $\theta_a$, h, and $H_a$ can be regarded as camera external information (external parameters of the camera), and the value f can be regarded as camera internal information (an internal parameter of the camera). By subjecting the points on an image shot with the camera to coordinate conversion using formula (7) based on those values, it is possible to produce a bird's-eye view image.

The image processing apparatus 10 previously recognizes, as necessary for perspective projection conversion, the values $\theta_a$, h, f, and $H_a$ for each camera, and produces individual bird's-eye view images through coordinate conversion of the points on shot-for-calibration images from different cameras according to formula (7). Thereafter, the image processing apparatus 10 adjusts the positions of the individual bird's-eye view images through rigid body conversion of those bird's-eye view images by a similar method as in one of Examples 1 to 3. Then, based on the correspondence between the coordinates of the individual characteristic points of calibration patterns on the individual bird's-eye view images after the position adjustment (their coordinates on the global coordinate system) and the coordinates of the individual characteristic points of the calibration patterns on the shot-for-calibration images (their coordinates on the shot-for-calibration images), the image processing apparatus 10 finds the initial value of each homography matrix $H_n'$.

After the initial values of all the homography matrices $H_n'$ are found, these are then optimized in a similar manner as in one of Examples 1 to 3.

When Example 1 is applied to Example 4, the processing proceeds as follows. First, by perspective projection conversion, individual bird's-eye view images are obtained. Then, only the bird's-eye view images corresponding to the cameras 1F, 1R, and 1L are subjected to position adjustment by rigid body conversion. Then, based on the correspondence between the coordinates of the individual characteristic points of the calibration patterns on these position-adjusted bird's-eye view images (their coordinates on the global coordinate system) and the coordinates of the individual characteristic points of the calibration patterns on the shot-for-calibration images (their coordinates on the shot-for-calibration images), the homography matrices $H_1'$ to $H_3'$ are found. Then, as described previously in connection with Example 1, while the error evaluation value $D_A$ is minimized, the homography matrix $H_4'$ is found.

Modifications and Variations

In connection with the embodiments described above, modified examples or supplementary explanations will be given below in Notes 1 to 5. Unless inconsistent, any part of the contents of these notes may be combined with any other.

Note 1: To perform planar projection conversion, four characteristic points are needed between the pre-conversion image and the post-conversion image. In view of this, in the embodiments described above, square calibration patterns each having four characteristic points are adopted. The calibration patterns, however, do not necessarily have to be square.

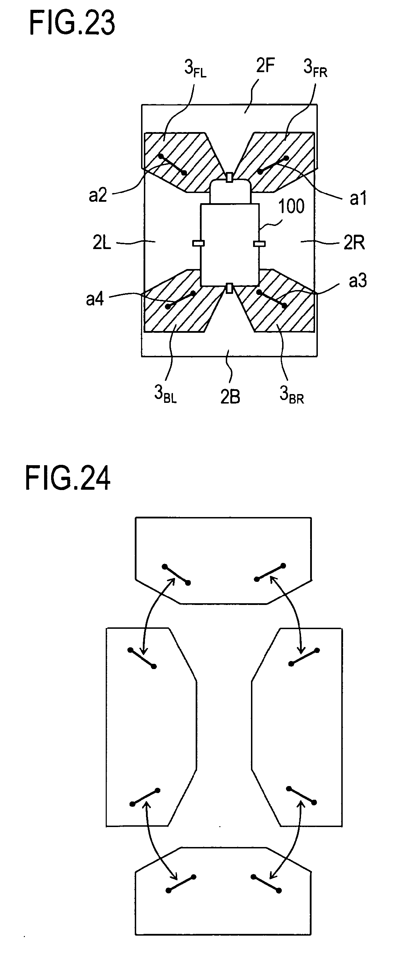

In particular, in processing preformed after conversion to bird's-eye view images, each calibration pattern has only to include a total of two or more characteristic points. Superficially, for example, as shown in Fig. 23, calibration patterns a1, a2, a3, and a4 each having the shape of a line segment may be arranged in common shooting areas $3_{FR}$, $3_{FL}$, $3_{BR}$, and $3_{BL}$ respectively; this, too, permits adjustment of the homography matrix $H_n'$ through rigid body conversion on the individual bird's-eye view images. Fig. 24 shows how rigid body conversion is performed by use of the calibration patterns a1 to a4. The calibration patterns a1 to a4 each include, as characteristic points, both ends of a line segment, and the length of the line segment on the global coordinate system is previously known. So long as the calibration patterns arranged respectively within the common shooting areas each include two or more characteristic points, by referring to the positional errors between projected points that should ideally coincide on the global coordinate system, it is possible to adjust and improve the homography matrix $H_n'$.

Note 2: In the above description, bird's-eye view images are images in which images shot with cameras are projected onto the ground. That is, in the embodiments described above, an all-around bird's-eye view image is produced by projecting images shot with cameras onto the ground and merging them together. Instead, the shot images may be projected on any predetermined surface (for example, a predetermined plane) other than the ground that is arbitrarily selected.

Note 3: Although the invention has been described by way of embodiments that deal with a field-of-view assistance system employing the cameras 1F, 1R, 1L, and 1B as vehicle-mounted cameras, the cameras connected to the image processing apparatus 10 may be fitted to anything other than a vehicle. That is, the invention may be applied as well to a monitoring system installed in a building or the like. In such a monitoring system, as in the embodiments described above, shot images from a plurality of cameras are projected onto a predetermined surface and merged together, and the merged image is displayed on a display apparatus.

Note 4: The functions of the image processing apparatus 10 can be realized in hardware, in software, or in a combination of hardware and software. All or part of the functions to be realized by the image processing apparatus 10 may be prepared in the form of a computer program so that those functions are, wholly or partly, realized as the program is executed on a computer.

Note 5: The parameter deriver that, in calibration processing, adjusts conversion parameters and thereby derives calibrated conversion parameters is incorporated in the image processing apparatus 10, and the camera calibration apparatus that is provided with the parameter deriver and that performs calibration processing for the cameras is also incorporated in the image processing apparatus 10. The parameter deriver includes a tentative parameter deriver that finds conversion parameters (a homography matrix $H_n'$) tentatively and a parameter adjuster that adjusts the tentative conversion parameters. After the calibration processing, the image processing apparatus 10 functions as a merged image producer that projects shot images onto a predetermined surface and merges them together to thereby produce a merged image (in the embodiments described above, an all-around bird's-eye view image).

**Claims**

1. A camera calibration apparatus comprising:

    a parameter deriver adapted to find parameters for projecting images shot with N cameras (where N is an integer of 3 or more) onto a predetermined surface and merging the images together, wherein
    the N cameras comprise a first camera, a second camera, ... and an N-th camera,
    the i-th camera (where i is every integer between 1 and N, inclusive) shares a common shooting area with at least one of the other (N - 1) cameras, so that there are a plurality of such common shooting areas in total,
    the parameter deriver finds the parameters based on results of shooting of calibration patterns arranged in the common shooting areas with the corresponding cameras, and
    the calibration patterns are arranged separate from one another.

**2.** The camera calibration apparatus according to claim 1, wherein
the common shooting areas at least include a common shooting area shared between the first and second cameras, a common shooting area shared between the second and third cameras, ... and a common shooting area shared between the (N - 1)-th and N-th cameras.

**3.** The camera calibration apparatus according to claim 2, wherein
the parameter deriver defines as a global coordinate system a coordinate system onto which the shot images are projected to be merged together, and
when a calibration pattern arranged in the common shooting area shared between the (N - 1)-th and N-th cameras is called a currently targeted calibration pattern,
the parameter deriver comprises
a first parameter deriver adapted to find, by use of results of shooting of calibration patterns with the first to (N - 1)-th cameras, a first parameter for subjecting the images shot with the first to (N - 1)-th cameras to coordinate conversion onto the global coordinate system, and
a second parameter deriver adapted to find, based on
coordinate information on the currently targeted calibration pattern obtained by subjecting the currently targeted calibration pattern shot with the (N - 1)-th camera to coordinate conversion onto the global coordinate system by use of the first parameter
coordinate information on the currently targeted calibration pattern shot with the N-th camera,
a second parameter for subjecting the image shot with the N-th camera to
coordinate conversion onto the global coordinate system,
so that the parameter deriver finds the parameters based on the first and second parameters.

**4.** The camera calibration apparatus according to claim 1 or 2, wherein
the parameter deriver defines as a global coordinate system a coordinate system onto which the shot images are projected to be merged together,
shapes of the individual calibration patterns are previously known to the parameter deriver and are previously recognized as previously known information by the parameter deriver, and
the parameter deriver
first tentatively finds the parameters by use of results of shooting of the calibration patterns with the individual cameras and
then, by use of the tentatively found parameters, subjects the calibration patterns shot with the individual cameras to coordinate conversion onto the global coordinate system to adjust the tentatively found parameters based on the shapes of the calibration patterns after the coordinate conversion and based on the previously known information
so as to find, through this adjustment, the parameters definitively.

**5.** A vehicle comprising N cameras and an image processing apparatus, wherein the image processing apparatus comprises the camera calibration apparatus according to any one of claims 1 to 4.

**6.** A camera calibration method for finding parameters for projecting images shot with N cameras (where N is an integer of 3 or more) onto a predetermined surface and merging the images together, wherein
the N cameras comprise a first camera, a second camera,... and an N-th camera,
the i-th camera (where i is every integer between 1 and N, inclusive) shares a common shooting area with at least one of the other (N - 1) cameras, so that there are a plurality of such common shooting areas in total,
the camera calibration method involves finding the parameters based on results of shooting of calibration patterns arranged in the common shooting areas with the corresponding cameras, and
the calibration patterns are arranged separate from one another.

# FIG.1

1F

100

1L

1R

1B

# FIG.2

1L

1F

100

2R

2B

2L

2F

# FIG.3A

2F

# FIG.3B

2L

# FIG.3C

2B

# FIG.3D

2R

FIG.4

FIG.5

FIG.6

FIG.7

FIG.8

50F

A2 — 50F

A2 — 201

202 — 201

A2 — A1

50L — 50R

A4 — A3

204 — 203

A4 — A3

50B

FIG.9

ALL-AROUND BIRD'S-EYE VIEW IMAGE

# FIG.10

S11 | ACQUIRE SHOT-FOR-CALIBRATION IMAGE FROM EACH CAMERA

S12 | CONVERT EACH SHOT-FOR-CALIBRATION IMAGE INTO BIRD'S-EYE VIEW IMAGE BY PLANAR PROJECTION CONVERSION

S13 | SUBJECT EACH BIRD'S-EYE VIEW IMAGE TO RIGID BODY CONVERSION USING CALIBRATION PATTERN CORRESPONDENCE (PERFORM INITIAL CALIBRATION ON $H_n'$)

S14 | OPTIMIZE $H_4'$ BASED ON POSITIONAL ERRORS (PROJECTION ERRORS) OF CHARACTERISTIC POINTS IN CALIBRATION PATTERNS A3 & A4

## FIG.11

## FIG.12

BIRD'S-EYE
VIEW CONVERSION

EP 1 968 011 A2

# FIG.13A

ALL-AROUND BIRD'S-EYE VIEW
IMAGE IMMEDIATELY
AFTER INITIAL CALIBRATION

314          313

# FIG.13B

ALL-AROUND BIRD'S-EYE VIEW
IMAGE AFTER OPTIMIZATION

25

## FIG.14

MERGED IMAGE OF
BIRD'S-EYE VIEW IMAGES
FROM CAMERAS 1F, 1R, & 1L

$H_4'$            $H_4'$

SHOT-FOR-CALIBRATION
IMAGE FROM CAMERA 1B

A4    A3

## FIG.15

352    340   350   351

d2       d1

342           341

353           354

d3        d4

343        344

# FIG.16

S11 | ACQUIRE SHOT-FOR-CALIBRATION IMAGE FROM EACH CAMERA

S12 | CONVERT EACH SHOT-FOR-CALIBRATION IMAGE INTO BIRD'S-EYE VIEW IMAGE BY PLANAR PROJECTION CONVERSION

S13 | SUBJECT EACH BIRD'S-EYE VIEW IMAGE TO RIGID BODY CONVERSION USING CALIBRATION PATTERN CORRESPONDENCE (PERFORM INITIAL CALIBRATION ON $H_n'$)

S24 | OPTIMIZE $H_1'$ TO $H_4'$ BASED ON POSITIONAL ERRORS (PROJECTION ERRORS) OF CHARACTERISTIC POINTS IN CALIBRATION PATTERNS A1 TO A4

# FIG17.A

IMMEDIATELY AFTER
INITIAL CALIBRATION

# FIG17.B

AFTER AVERAGING
OF QUADRANGLES

# FIG17.C

AFTER CORRECTION
TO SQUARES

# FIG17.D

AFTER RECALCULATION OF
HOMOGRAPHY MATRICES

EP 1 968 011 A2

FIG.18A

FIG.18B

FIG.19

• ←PROJECTION TARGET POINT

## FIG.20

## FIG.21

## FIG.22

# FIG.23

# FIG.24

## FIG.25 PRIOR ART

## FIG.26 PRIOR ART

## FIG.27 PRIOR ART

FRONT CAMERA
BIRD'S-EYE
VIEW IMAG

LEFT CAMERA
BIRD'S-EYE
VIEW IMAGE

RIGHT CAMERA
BIRD'S-EYE
VIEW IMAGE

BACK CAMERA
BIRD'S-EYE
VIEW IMAGE

# FIG.28 PRIOR ART

# FIG.29 PRIOR ART

SHOT IMAGE → BIRD'S-EYE VIEW IMAGE

(x,y)

PLANAR
PROJECTION

(x',y')

# FIG.30 PRIOR ART

**EP 1 968 011 A2**

**REFERENCES CITED IN THE DESCRIPTION**

**Patent documents cited in the description**

- JP 3372944 B
- JP 2004235986 A
- JP 2006287892 A
- JP 2004342067 A